Europäisches Patentamt

European Patent Office

Office européen des brevets

(11) Numéro de publication: **0 391 778**

**A1**

(12) **DEMANDE DE BREVET EUROPEEN**

(21) Numéro de dépôt: **90400884.4**

(51) Int. Cl.5: **F22B 37/00**

(22) Date de dépôt: **30.03.90**

(30) Priorité: **04.04.89 FR 8904417**

(43) Date de publication de la demande:
**10.10.90 Bulletin 90/41**

(84) Etats contractants désignés:
**BE CH DE ES LI SE**

(71) Demandeur: **FRAMATOME**
**Tour Fiat 1, Place de la Coupole**
**F-92400 Courbevoie(FR)**

(72) Inventeur: **Grypczynski, Daniel**
**4 Rue St Nestor**
**F-69008 Lyon(FR)**
Inventeur: **Jacquier, Paul**
**37 Rue Chemin des Bruyères**
**F-69160 Tassin la Demi-Lune(FR)**
Inventeur: **Guglielmo, André**
**45 Avenue Marc Sangnier**
**F-69100 Villeurbanne(FR)**

(74) Mandataire: **Bouget, Lucien et al**
**Cabinet Lavoix 2, Place d'Estienne d'Orves**
**F-75441 Paris Cédex 09(FR)**

(54) **Dispositif de centrage d'un outil d'intervention dans un tube de générateur de vapeur.**

(57) Le dispositif de centrage comporte une platine de centrage (23) montée rotative sur un élément porteur (21) autour d'un axe parallèle à l'axe des tubes du générateur de vapeur, portant deux pinces de fixation (39) à expansion radiale et un moyen d'orientation motorisé (22, 27, 28) de la platine (23) autour de son axe, les pinces de fixation (39) étant placées sur la platine dans des positions relatives correspondant à des ouvertures de passage des tubes (13) dans la plaque tubulaire (18).

FIG.3

L'invention concerne un dispositif de centrage d'un outil d'intervention dans un tube de générateur de vapeur.

Les générateurs de vapeur, en particulier les générateurs de vapeur des réacteurs nucléaires à eau sous pression comportent un faisceau de tubes dont les extrémités traversent une plaque tubulaire suivant un réseau régulier de trous recevant chacun une extrémité de tube. Les tubes du faisceau affleurent sur une première face de la plaque tubulaire appelée face d'entrée par laquelle l'eau sous pression constituant le fluide de refroidissement du réacteur nucléaire pénètre dans les tubes.

Il est nécessaire d'effectuer, lors des arrêts du réacteur nucléaire, des opérations de contrôle, d'entretien et de réparation des générateurs de vapeur.

On utilise pour cela des outils d'intervention ou des sondes de contrôle qui sont portés par un dispositif de déplacement fixé dans la boîte à eau du générateur de vapeur située en-dessous de la plaque tubulaire.

Certains contrôles ou certaines interventions exigent que l'outil ou la sonde de contrôle soit placé en position parfaitement centrée par rapport aux tubes dans lequel on l'introduit. Il peut être également nécessaire d'obtenir des reprises des efforts lorsque l'outil subit une poussée tendant à le faire sortir du tube.

Les outils d'intervention ou les sondes de contrôle dans les tubes des générateurs de vapeur comportent généralement un corps de forme allongée susceptible d'être introduit dans le tube à la hauteur voulue. Il est nécessaire, dans la plupart des cas, d'assurer un alignement parfait entre l'axe du corps allongé de l'outil ou de la sonde de contrôle et l'axe du tube dans lequel on effectue l'intervention.

On ne connaissait pas jusqu'ici de moyens pivotants pour réaliser un centrage parfait d'un outil d'intervention dans un tube de générateur de vapeur, c'est-à-dire un moyen permettant de mettre en concordance l'axe de l'outil d'intervention et l'axe du tube, de manière extrêmement précise.

Le but de l'invention est donc de proposer un dispositif de centrage ou de reprise d'efforts d'un outil d'intervention dans un tube de générateur de vapeur comportant un faisceau de tubes dont les extrémités traversent une plaque tubulaire suivant un réseau régulier de trous recevant chacune une extrémité de tube, l'outil d'intervention étant introduit dans le tube par une face de la plaque tubulaire constituant sa face d'entrée sur laquelle le tube est affleurant et supporté par un élément porteur mobile disposé dans la boîte à eau du générateur de vapeur, ce dispositif permettant un centrage très précis de l'outil d'intervention ainsi qu'une reprise d'effort efficace, par des opérations simples et qui peuvent être facilement commandées à distance.

Dans ce but, le dispositif suivant l'invention comporte une platine de centrage montée pivotante sur un bras porteur rotatif autour d'un axe parallèle à l'axe des tubes du générateur de vapeur portant deux pinces de fixation à expansion radiale dont le diamètre à l'état non expansé est inférieur au diamètre intérieur d'un tube du faisceau et dont le diamètre à l'état expansé est au moins égal au diamètre intérieur d'un tube du faisceau, et un moyen d'orientation motorisé de la platine autour de son axe, les pinces de fixation étant placées sur la platine dans des positions relatives correspondant à des positions de deux ouvertures de passage des tubes dans la plaque tubulaire.

Afin de bien faire comprendre l'invention, on va maintenant décrire, à titre d'exemple non limitatif, en se référant aux figures jointes en annexe, plusieurs modes de réalisation d'un dispositif de centrage suivant l'invention, en particulier dans le cas du centrage d'un outil d'usinage électrique d'un bouchon d'obturation d'un tube de générateur de vapeur.

La figure 1 est une vue schématique d'un dispositif de centrage suivant l'invention et suivant un premier principe général de réalisation.

La figure 2 est une vue schématique d'un dispositif de centrage suivant l'invention et suivant un second principe général de réalisation.

La figure 3 est une vue en élévation avec coupe partielle de l'ensemble de l'outil d'intervention, de ses moyens de support et d'un dispositif de centrage suivant le premier principe général de réalisation.

La figure 4 est une vue à plus grande échelle d'une partie de la figure 3 montrant le dispositif de centrage.

La figure 4A est une vue identique à la figure 4, dans le cas où l'une des pinces de fixation est engagée dans un bouchon.

La figure 5 est une vue de dessus d'un dispositif de centrage suivant l'invention et suivant le second principe général de réalisation.

La figure 6 est un schéma montrant les positions des axes des tubes d'un réseau à mailles carrées se trouvant sur un cercle ayant pour rayon cinq pas du réseau des tubes.

La figure 7 est une vue schématique montrant la position des axes des tubes d'un réseau à mailles triangulaires.

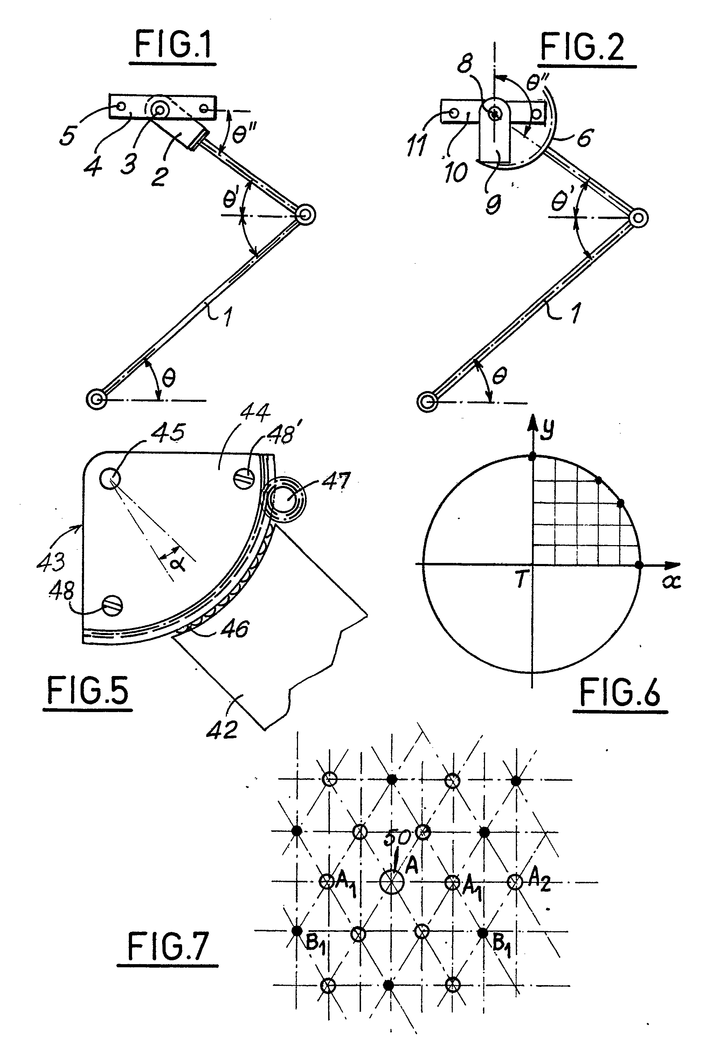

Sur la figure 1, on voit un premier mode de réalisation général de l'invention. Un dispositif de positionnement et de centrage d'un outil d'intervention dans un tube de générateur de vapeur est représenté dans un plan parallèle à la plaque tubulaire du générateur de vapeur. Ce dispositif situé dans la boîte à eau du générateur de vapeur comporte un bras 1 articulé en deux parties orientables l'une par rapport à l'autre (bras θ /θ´ ) ou tout autre type de porteur comportant un bras de déplacement.

A l'extrémité du bras 1 est fixé de manière rigide le corps 2 de l'outil 3. Une platine de centrage 4 est montée pivotante autour de l'axe de l'outillage 3 (perpendiculaire au plan de la figure ) sur une douille dans laquelle l'outil est monté axialement.

La platine de centrage 4 porte deux pinces de centrage 5 distantes d'une longueur égale à un nombre pair de pas du réseau des tubes du générateur de vapeur.

Lorsque l'outil 3 est mis en place suivant l'axe d'un tube du générateur de vapeur, la platine 4 peut être déplacée en rotation autour de l'axe de l'outil, de manière que les pinces 5 se trouvent alignées avec les axes de deux tubes du faisceau du générateur de vapeur. L'outil et les pinces de centrage peuvent alors être introduits dans trois tubes du faisceau. L'expansion des pinces 5 dans les deux tubes situés de part et d'autre du tube dans lequel on effectue l'intervention permet de réaliser un centrage parfait de l'outil.

Sur la figure 1, on a représenté les pinces 5 et l'outil 3 dans des positions alignées. Ces éléments peuvent cependant être disposés dans des positions non alignées et par exemple former un angle de 90˚.

Sur la figure 2, on voit un second mode de réalisation général de l'invention. Le dispositif de positionnement et de centrage de l'outil est également représenté dans un plan parallèle à la plaque tubulaire du générateur de vapeur.

Il comporte le bras (θ/θ´) 1 disposé dans la boîte à eau et déjà décrit et représenté sur la figure 1.

A l'extrémité du bras 1 est fixée une glissière de déplacement 6 de forme circulaire et centrée sur l'axe de l'outil 8.

Le corps 9 de l'outil 8 est monté sur la glissière 6 mobile en rotation autour de l'axe de l'outil 8.

Une platine de centrage 10 portant deux pinces 11 est fixée rigidement sur le corps 9 de l'outil 8.

Les pinces 11 sont disposées de part et d'autre de l'outil 8 et à une distance l'une de l'autre égale à un nombre pair de pas du réseau.

Le bras 1 permet de placer l'outil 8 dans l'alignement axial d'un tube de faisceau dans lequel on réalise une intervention.

On fait ensuite tourner le corps 9 de l'outil 8 sur la glissière 6 pour mettre les pinces 11 dans l'alignement de deux tubes du faisceau.

Dans ce cas également, il est possible de placer les pinces 11 et l'outil 8 sur la platine 10 de manière que ces éléments ne soient pas alignés mais forment un angle qui peut être de préférence égal à 90˚.

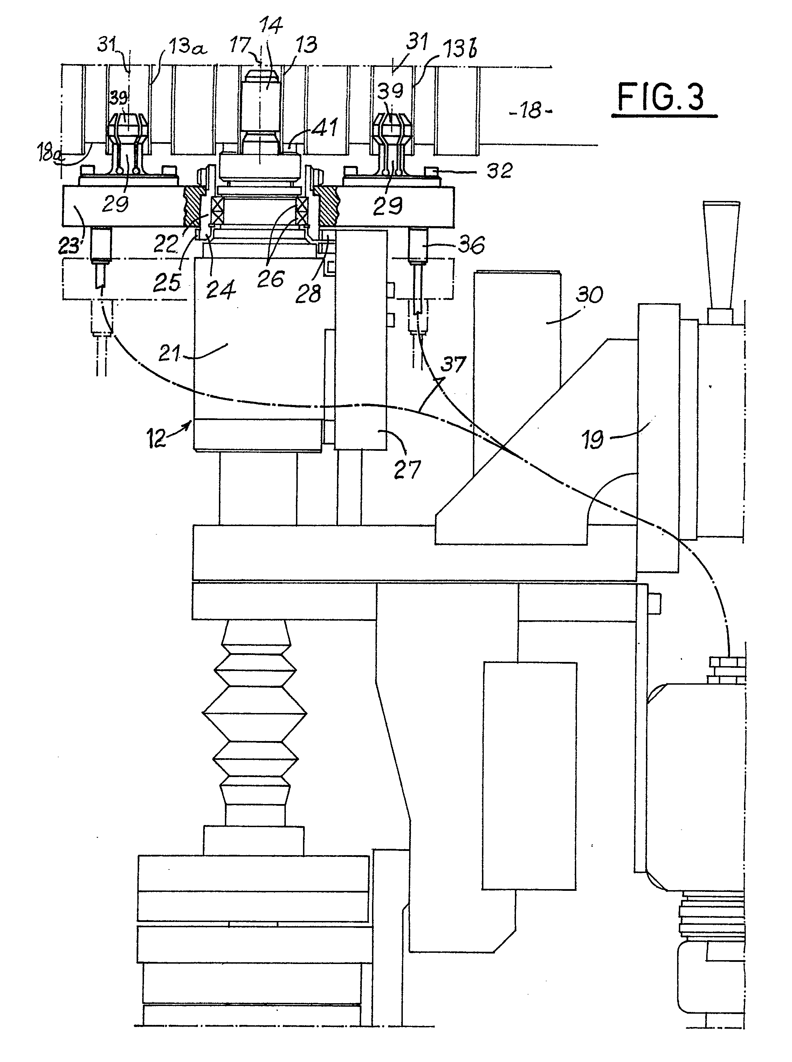

Sur la figure 3, on voit un outil d'intervention dans un tube de générateur de vapeur désigné de manière générale par le repère 12 et constitué, dans le cas de l'exemple de réalisation, par un outil de perçage d'un bouchon d'obturation 14 disposé à l'intérieur d'un tube 13 du générateur de vapeur traversant la plaque tubulaire 18. Une telle opération peut être avantageusement effectuée, comme il est décrit dans une demande de brevet de la Société FRAMATOME déposée le même jour que la présente demande de brevet, par étincelage à l'aide d'une électrode dont la partie d'extrémité est introduite à l'intérieur du bouchon par l'extrémité du tube 13 affleurant la face d'entrée 18a de la plaque tubulaire 18.

Pour réaliser cette opération, il est nécessaire d'assurer un alignement parfait de l'axe de l'électrode correspondant à sa direction d'avance, avec l'axe 17 du tube 13 dans lequel est disposé le bouchon d'obturation 14.

L'ensemble de l'outil d'intervention 12 est fixé à l'extrémité d'un bras 19 monté à l'intérieur de la boîte à eau du générateur de vapeur et permettant de déplacer l'outillage 12 pour l'amener dans l'alignement d'un tube quelconque 13 du générateur de vapeur, en-dessous de la plaque tubulaire 18.

L'outil 12 est monté à l'intérieur d'une douille tubulaire 21 elle-même fixée sur le bras 19 par l'intermédiaire d'un support.

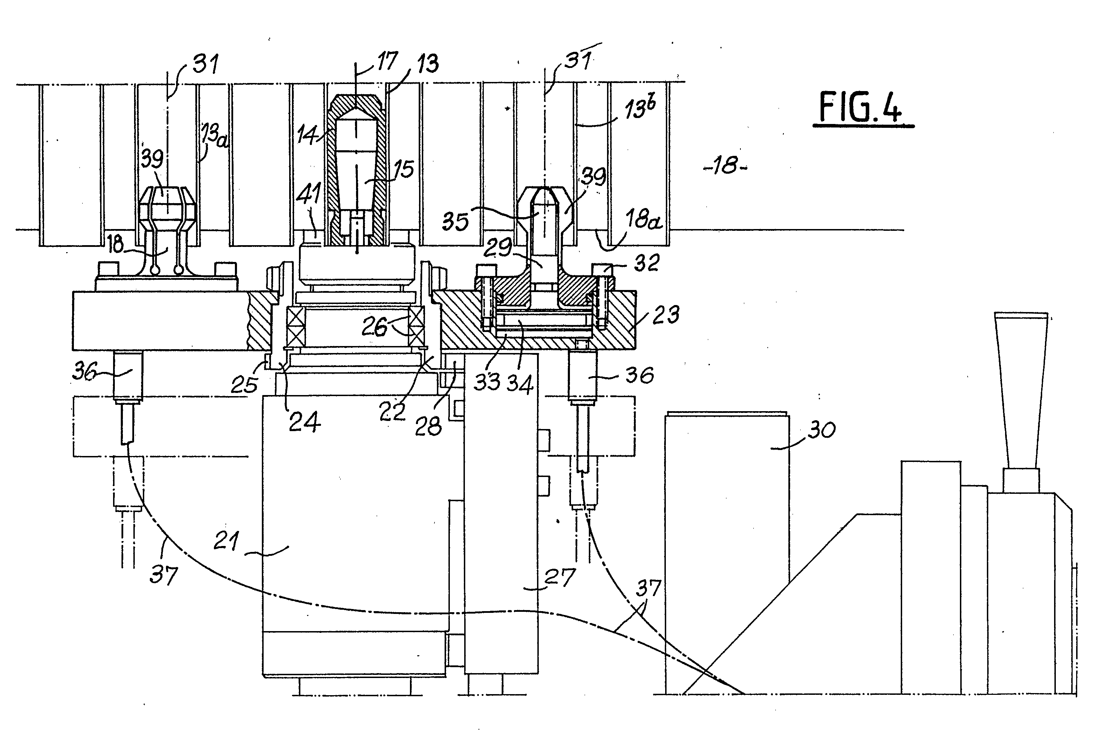

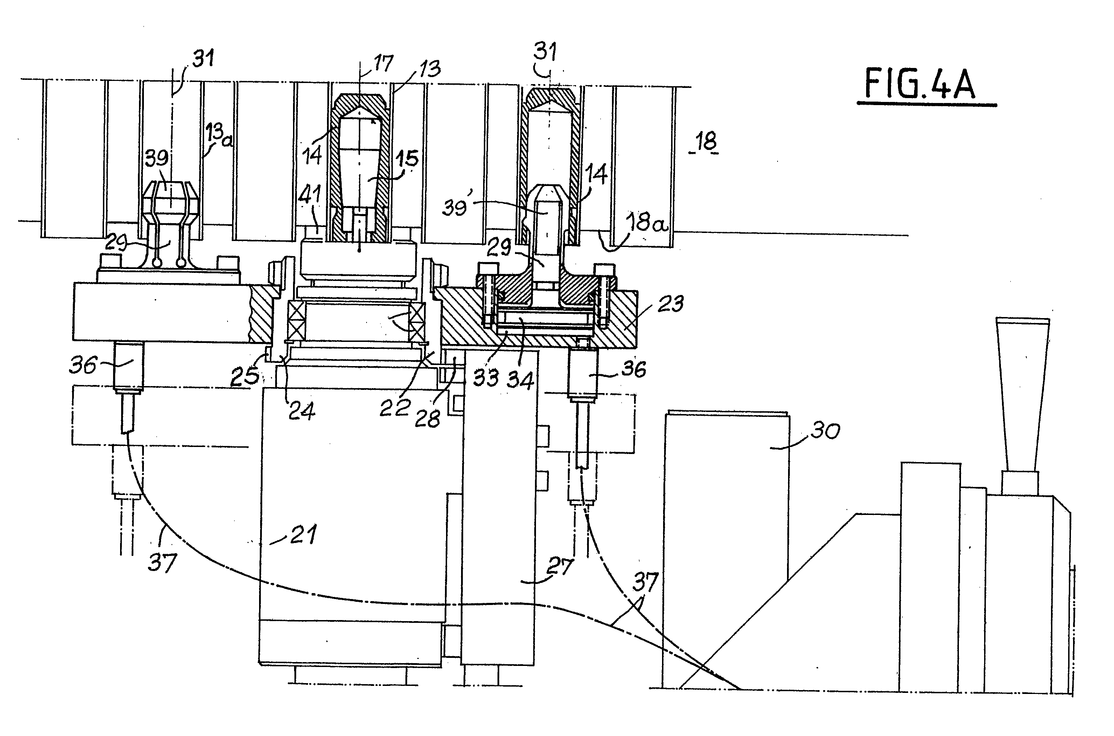

Comme il est visible sur les figures 3 et 4, le dispositif de centrage de l'outil 12 dans le tube 13 du faisceau est du type général représenté sur la figure 1. Il comporte une platine 23 montée rotative autour de la partie supérieure de la douille tubulaire 21, par l'intermédiaire d'un palier 22 constitué par une couronne 24 comportant une denture 25 sur sa surface externe et par des paliers à billes 26 dont la bague interne est fixée sur la douille 21.

Le bras 19 porte également par l'intermédiaire de la douille 21 et de son support, un moteur électrique disposé à l'intérieur d'un carter 27 comportant un pignon de sortie 28 engrènant avec la couronne dentée 25.

Ce dispositif permet de commander à distance, avec une grande précision, l'orientation de la platine de centrage 23 autour de l'axe de l'outil 12.

Comme il est visible sur la figure 4, la platine 23 porte deux pinces de centrage 29 constituées sous la forme de douilles fendues dont les secteurs successifs dans la direction circonférentielle peuvent être écartés les uns des autres par un dispositif de commande pneumatique visible sur la pince 29 représentée en coupe sur la partie droite de la figure 4.

Le diamètre nominal de la douille fendue de la pince 29, lorsque les secteurs de cette douille ne sont pas soumis à une expansion radiale interne, est légèrement inférieur au diamètre intérieur d'un tube tel qu'un tube 13a ou 13b du générateur de vapeur.

A l'état non expansé, les douilles 18 peuvent donc être introduites dans deux tubes du réseau en utilisant un dispositif de déplacement vertical associé au bras 19. Le déplacement vertical peut être effectué par un vérin placé dans la douille 21, l'avance de l'outil étant fournie par le moteur 30. Ce dispositif peut être constitué par exemple par un moteur 30 entraînant une tige filetée verticale sur la quelle est monté un écrou lui-même solidaire de la partie inférieure de l'outil 12 sur lequel est engagée la douille 21 portant le plateau de centrage 23.

Les pinces de serrage 29 sont disposées sur la platine 23 de manière à être parfaitement symétriques par rapport à l'axe de l'outillage 12 correspondant à l'axe de la douille 21 dont on veut réaliser l'alignement parfait avec l'axe 17 du tube 13 dans lequel se trouve le bouchon 14 à extraire.

De plus, l'écartement des axes 31 des deux pinces 29 est égal à un nombre pair de pas du réseau des tubes, ce pas correspondant à la distance entre deux axes de tubes successifs d'une rangée de tubes de la plaque tubulaire.

Comme il est visible sur la pince 29 représentée en coupe sur la partie droite de la figure 3, la pince 29 est fixée de manière étanche à l'intérieur d'un évidement de la platine 23, grâce à des vis 32, de manière qu'une chambre de vérin pneumatique 33 soit délimitée entre le corps de la pince 29 et l'évidement de la platine 23. Un piston 34 solidaire d'une tige d'actionnement 35 est monté à l'intérieur du cylindre pour constituer un vérin pneumatique.

Les vérins pneumatiques des pinces 29 de la platine 23 sont alimentés en air sous pression par l'intermédiaire de conduites 37 reliées à un distributeur fixé sur le bras 19 et à un ajutage 36.

Le déplacement vers le haut de la tige 35, sous l'effet de la pression de l'air comprimé, permet de réaliser l'expansion radiale des secteurs de la douille fendue constituant la partie externe de la pince 29.

On peut utiliser deux types de pince 29 se différenciant par le diamètre nominal des douilles fendues qui peuvent être introduites dans deux tubes 13a, 13b situés de manière symétrique dans une rangée de tubes, par rapport au tube 13 dans lequel on désire réaliser une intervention.

Au cours d'une campagne, on effectue un ensemble d'opérations de réalésage de bouchon dans des zones différentes de la plaque tubulaire. Il peut se produire qu'une des pinces de centrage de l'outillage ne puisse être placée que dans un tube renfermant déjà un bouchon réalésé.

Comme il est visible sur la figure 4A, l'une des douilles fendues 39' du dispositif peut présenter un diamètre externe nominal très légèrement inférieur au diamètre intérieur d'un bouchon 14 alésé avec le dispositif d'étincelage (figure 4A). On équipe la platine 23 suivant la position du tube 13 dans lequel on veut réaliser l'intervention de manière à faire pénétrer les pinces de centrage 29 soit dans un tube non obturé, soit encore dans un tube déjà obturé par un bouchon réalésé.

Pour réaliser la mise en place de l'outillage et son centrage parfait, on amène l'outillage muni de son dispositif de centrage au voisinage du tube 13, sous la face 18a de la plaque tubulaire, dans une position sensiblement centrée.

On réalise par rotation de la platine 23 en utilisant le moteur d'entraînement du pignon 28 et la couronne dentée 22, un alignement des douilles 29 et de deux tubes 13a, 13b du réseau de tubes traversant la plaque tubulaire situés de part et d'autre d'un tube 13 dans lequel on réalise l'intervention pour l'extraction d'un bouchon 14.

On introduit les pinces 29 dans les tubes 13a, 13b correspondants grâce au dispositif de dépla cement vertical relié au bras 19, l'introduction des pinces dans les tubes 13a, 13b étant réalisée avec les tiges 35 des vérins pneumatiques en retrait et les secteurs de la douille fendue dans leur position rétractée.

De plus, les douilles fendues des dispositifs de centrage 29 comportent une partie tronconique d'engagement 39 à leur partie supérieure permettant de faciliter l'introduction des pinces dans les tubes du réseau correspondants.

L'introduction des pinces est assurée grâce au dispositif de déplacement vertical relié au bras 19 assurant simultanément la mise en place des pinces 39 dans les tubes 13a et 13b et la mise en place d'une butée d'extrémité 41 de l'outillage 12 contre la face d'entrée 18a de la plaque tubulaire 18.

On alimente ensuite les vérins pneumatiques des pinces 39 de manière à réaliser un centrage parfait de l'électrode de l'outillage d'étincelage 12 par rapport au tube 13, c'est-à-dire un alignement parfait de l'axe de l'électrode avec l'axe du tube 17 et du bouchon 14.

L'opération de perçage du bouchon 14 grâce à l'électrode d'étincelage peut être effectuée avec une très grande précision, en ce qui concerne l'alignement de l'axe de perçage et de l'axe 17 du tube 13.

Lorsque l'opération de perçage du bouchon 14 est terminée, l'électrode est redescendue dans sa position de retrait à l'intérieur de la douille tubulaire 21, la pression dans les pinces de centrage 39 est relâchée et la douille tubulaire 21 est déplacée vers le bas, soit en utilisant un vérin intégré à cette douille tubulaire 21, soit en utilisant le dispositif de déplacement de l'électrode venu en contact avec une butée d'appui.

Lorsque les pinces de centrage de l'électrode sont dégagées des tubes correspondants, le dispositif peut être amené grâce àu bras 19 en face d'une nouvelle position permettant le perçage par étincelage d'un bouchon 14 fixé dans un nouveau tube 13.

Dans tous les cas, la mise en place et le centrage de l'outillage 12 peuvent être réalisés de manière extrêmement rapide et extrêmement précise par des opérations qui peuvent être surveillées à distance, par exemple grâce à une caméra de télévision.

Sur la figure 5, on a représenté un second mode de réalisation d'un dispositif de centrage suivant l'invention. Ce mode de réalisation correspond au second principe général de réalisation de l'invention. L'élément porteur de l'outillage est constitué par un bras 42 monté rotatif dans la boîte à eau du générateur de vapeur, dans un plan parallèle à la plaque tubulaire. A l'extrémité du bras 42, est monté un support d'outillage 43 sous la forme d'une crémaillère circulaire 44. L'outil 45 définit l'axe de travail de l'outillage parallèle à l'axe des tubes du faisceau dont la position correspond au centre de la crémaillère circulaire constituant le support 43. La crémaillère circulaire 44 est montée rotative par son bord externe circulaire, à l'extrémité du bras 42, par l'intermédiaire d'une glissière à billes 46 ou d'un système équivalent. Il comporte une partie dentée en forme de secteur circulaire légèrement en retrait par rapport au bord externe de la glissière ou un autre système d'orientation équivalent.

La crémaillère circulaire dentée est également centrée sur l'axe de l'outillage 45 et est en prise avec un pignon denté 47 relié à un moteur d'entraînement en rotation. La crémaillère 44 constituant un support porte deux pinces de centrage 48 et 48' analogues aux pinces 39 du mode de réalisation représenté que les figures 3 et 4.

Dans le cas envisagé d'un réseau à mailles carrées, les axes des pinces 48 et 48' sont situés sur deux rayons à 90° de la crémaillère 44 à une distance de l'axe de l'outillage 45 égale à cinq pas du réseau des tubes.

Dans ce cas, il existe, comme il est visible sur la figure 6, dans chaque quadrant, quatre positions d'axes de tubes du réseau situées à cinq pas d'un point T matérialisant la position de l'axe de l'outil.

Ces points ont comme coordonnées (dans le système d'axes xTy), en nombre de pas :

(0, 5) ; (3, 4) ; (4, 3) et (5, 0).

Lorsque les axes de pinces du dispositif de centrage sont situés à une distance de 5 pas de l'axe de l'outil, il existe donc de nombreuses possibilités d'orientation de la platine pour placer les pinces dans l'alignement de tubes du faisceau.

Si A et B sont des points du support d'outillage situés à 5 pas de l'axe de l'outil, l'angle $\beta = \widehat{ATB}$ pourra prendre les différentes valeurs suivantes :

$tg\beta = 0$ $\beta = 0$
$tg\beta = 3/4$ $\beta \simeq 37°$
$tg\beta = 4/3$ $\beta \simeq 53°$
$tg\beta = 00$ $\beta = 90°$

ou encore la somme de plusieurs de ces valeurs.

Dans le cas où $\beta$ est égal à 90°, comme représenté sur la figure 5, l'outil étant situé dans un angle du support, on peut accèder à des ouvertures de tubes situées au voisinage d'obstacles dans la boîte à eau du générateur de vapeur.

On peut montrer qu'il existe une relation entre l'angle $\alpha$ définissant la position angulaire relative entre l'outillage et le bras porteur et l'angle $\theta$ définissant la position angulaire du bras porteur, suivant la valeur de l'angle $\beta$ choisi.

La combinaison d'une rotation du bras porteur 42 d'un angle $\theta$ et du support 43 d'un angle $\alpha$ déterminés l'un par rapport à l'autre permet de placer les pinces 48 et 48' et l'outillage 45 dans des positions voulues dans l'alignement des extrémités de tubes du faisceau affleurant à la face d'entrée de la plaque tubulaire.

Pour cela, le pignon 47 est associé a un moteur et à un codeur permettant d'asservir l'angle $\alpha$ à l'angle $\theta$ de rotation du bras 42. Un calculateur permet de préciser la relation à utiliser en fonction de $\beta$.

La disposition de l'outil 45 à l'extrémité angulaire du secteur 44 permet également d'atteindre les tubes du faisceau quelle que soit leur position et en particulier lorsque l'extrémité de ces tubes est voisine d'une paroi ou d'un obstacle.

Dans le cas d'un réseau à mailles triangulaires comme représenté sur la figure 7 constitué par des triangles isocèles juxtaposés, les pinces de centrage peuvent être disposées autour de l'axe 50 de l'outillage à des distances de l'outil égales à :

P, 2P, 3P, ... , nP (points A)
ou encore P $\sqrt{3}$, 2P $\sqrt{3}$, 3P $\sqrt{3}$, ... , nP$\sqrt{3}$ si P est le pas du réseau (Points B).

L'invention ne se limite pas aux modes de réalisation qui ont été décrits.

C'est ainsi qu'on peut imaginer des pinces de serrage 39 disposées d'une manière différente sur la platine 23, dans des positions symétriques par rapport à l'axe de l'outillage ou dans des positions non symétriques correspondant à des positions relatives de deux tubes du faisceau.

Le dispositif de centrage ou de reprise d'efforts peut être utilisé non seulement pour réaliser la mise en place et le centrage d'un outil de perçage, par exemple par étincelage, mais encore pour effectuer la mise en place d'un outillage quelconque dont l'avance à l'intérieur du tube 2 doit être réalisée suivant l'axe de ce tube. Le dispositif de centrage ou de reprise d'efforts peut être également utilisé pour la mise en place et le déplacement d'une sonde de contrôle à l'intérieur d'un tube 2 du générateur de vapeur.

## Revendications

1.- Dispositif de centrage d'un outil d'intervention (3, 8, 12) dans un tube (13) de générateur de vapeur comportant un faisceau de tubes dont les extrémités traversent une plaque tubulaire (18) suivant un réseau régulier de trous recevant chacun une extrémité de tube (13), l'outil d'intervention étant introduit dans le tube par une face (18a) de la plaque tubulaire constituant la face d'entrée sur laquelle le tube est affleurant et supporté par un élément porteur mobile disposé dans la boîte à eau du générateur de vapeur, caractérisé par le fait qu'il comporte une platine de centrage (23) montée pivotante sur l'élément porteur autour d'un axe parallèle à l'axe des tubes du générateur de vapeur portant deux pinces de fixation (39) à expansion radiale dont le diamètre à l'état non expansé est inférieur au diamètre intérieur d'un tube du faisceau et dont le diamètre à l'état expansé est au moins égal au diamètre intérieur d'un tube du faisceau, et un moyen d'orientation motorisé (22, 27, 28) de la platine (13) autour de son axe de pivotement, les pinces de fixation (39) étant placées sur la platine dans des positions relatives correspondant à des positions de deux ouvertures de passage des tubes (13) dans la plaque tubulaire (18).

2.- Dispositif de centrage suivant la revendication 1, caractérisé par le fait qu'un support d'outillage (2) est monté rigidement solidaire de l'élément porteur (1) et que la platine de centrage (4) est montée pivotante sur le support d'outillage (2).

3.- Dispositif de centrage suivant la revendication 2, caractérisé par le fait que le support de l'outil (12) comporte une douille tubulaire (21) suivant l'axe de laquelle est monté l'outil d'intervention (12) et que la platine de centrage (23) est montée rotative sur la douille tubulaire (21) autour de son axe.

4.- Dispositif de centrage suivant la revendication 3, caractérisé par le fait que le moyen d'orientation motorisé de la platine (23) autour de l'axe de la douille tubulaire (21) est constitué par une couronne dentée (22) engrènant avec un pignon (28) entraîné par un moteur (27).

5.- Dispositif suivant la revendication 1, caractérisé par le fait qu'un support d'outillage (9) est monté rotatif sur l'élément porteur (1) autour de l'axe de l'outil (8) et que la platine de centrage (10) est solidaire du support d'outillage (9).

6.- Dispositif de centrage suivant la revendication 1 , caractérisé par le fait que l'élément porteur est un bras (42) monté mobile en rotation dans un plan parallèle à la plaque tubulaire (18) et que la platine (44) montée rotative à l'extrémité du bras (42) autour d'un axe confondu avec l'axe de l'outillage (45) constitue le support d'outillage.

7.- Dispositif de centrage suivant la revendication 5 dans le cas d'un réseau de tubes à mailles carrées, caractérisé par le fait que la platine (44) est constituée par un secteur circulaire relié à l'extrémité du bras (42), l'outil (45) étant fixé suivant l'axe du secteur circulaire (44) et les pinces (48, 48') suivant des rayons du secteur circulaire à des distances de l'outil correspondant à cinq pas du réseau de tubes.

8.- Dispositif de centrage suivant la revendication 7, caractérisé par le fait que les pinces (48, 48') sont disposées autour de l'axe de l'outil (34) suivant deux positions choisies parmi un ensemble de positions définies dans chacun des quadrants d'un cercle centré sur l'outil (34) et de rayon cinq pas du réseau, le nombre de positions définies par quadrant étant égal à quatre.

9.- Dispositif de centrage suivant la revendication 7, caractérisé par le fait que le secteur (44) comporte une partie circulaire dentée ayant pour axe l'axe de l'outil (45) en prise avec un pignon d entraînement motorisé (47).

10.- Dispositif de centrage suivant la revendication 9, caractérisé par le fait que le moteur d entraînement du pignon (47) est asservi à un moyen moteur d'entraînement du bras (42) en rotation.

11.- Dispositif de centrage suivant la revendication 1, caractérisé par le fait que les pinces (39) sont constituées par des douilles fendues présentant une pluralité de secteurs suivant l'axe de chacune desquelles est montée une tige d'actionnement (35) solidaire d'un piston (34) d'un vérin pneumatique ayant une chambre (33) ménagée dans la platine de centrage (23).

FIG.1

FIG.2

FIG.5

FIG.6

FIG.7

FIG.3

FIG.4

EP 0 391 778 A1

FIG.4A

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-30828 (WESTINGHOUSE)<br>* page 3, ligne 25 - page 4, ligne 12; figures * | 1 | F22B37/00 |
| A | FR-A-1538119 (GENERAL DYNAMICS)<br>* page 4, colonne de droite, lignes 16 - 36 *<br>* page 5, colonne de droite, ligne 31 - page 6, colonne de droite, ligne 15; figures * | 1 | |
| A | DE-U-8712638 (SIEMENS)<br>* page 5, lignes 4 - 15; figures * | 1 | |

| | DOMAINES TECHNIQUES RECHERCHES (Int. Cl.5) |
|---|---|
| | F22B |

Le présent rapport a été établi pour toutes les revendications

| Lieu de la recherche | Date d'achèvement de la recherche | Examinateur |
|---|---|---|
| LA HAYE | 08 JUIN 1990 | VAN GHEEL J.U.M. |